# EUROPÄISCHE PATENTSCHRIFT

(11) **EP 3 326 357 B1**
(45) Veröffentlichungstag und Bekanntmachung des Hinweises auf die Patenterteilung: **27.03.2019**
(21) Anmeldenummer: 16742202.1
(22) Anmeldetag: 12.07.2016
(51) Int. Cl.: H04N 5/232, H04N 7/18, G08B 13/196

(54) **ÜBERWACHUNGSKAMERA, SYSTEM MIT EINER ÜBERWACHUNGSKAMERA SOWIE VERFAHREN ZUM BETREIBEN EINER ÜBERWACHUNGSKAMERA**
MONITORING CAMERA, SYSTEM COMPRISING A MONITORING CAMERA AND METHOD FOR OPERATING A MONITORING CAMERA
CAMÉRA DE SURVEILLANCE, SYSTÈME COMPRENANT UNE CAMÉRA DE SURVEILLANCE ET PROCÉDÉ POUR FAIRE FONCTIONNER UNE CAMÉRA DE SURVEILLANCE

(30) Priorität: 20.07.2015 DE 102015111728
(43) Veröffentlichungstag der Anmeldung: 30.05.2018
(73) Patentinhaber: INNOGY SE, 45128 Essen (DE)
(72) Erfinder: GLOCK, Christian, 44793 Bochum (DE)
(74) Vertreter: Cohausz & Florack
(86) Internationale Anmeldenummer: PCT/EP2016/066502
(87) Internationale Veröffentlichungsnummer: WO 2017/012916

(56) Entgegenhaltungen:
- WO-A2-2008/064270
- US-A1- 2012 013 744
- US-A1- 2014 037 283
- US-A1- 2014 301 729

## Beschreibung

Der Gegenstand umfasst eine Überwachungskamera, ein System, insbesondere ein Heimautomatisierungssystem, mit einer Überwachungskamera als auch ein Verfahren zum Betreiben einer Überwachungskamera.

Überwachungskameras werden heutzutage nicht nur in öffentlichen und halböffentlichen Bereichen eingesetzt, welche sicherheitsrelevante Bereiche betreffen, sondern auch im häuslichen Umfeld. Insbesondere sind Überwachungskameras für Heimanwender bekannt, welche eine Innenraumüberwachung durchführen können. Auch Außenraumüberwachungskameras sind bekannt. Beide Arten von Überwachungskameras verfügen in der Regel über einen optischen Sensor, häufig einen CCD-Sensor (Charged Coupled Device), über den ein Bewegtbild eines Überwachungsbereichs erfasst werden kann. Überwachungskameras können dabei laufend oder in bestimmten Zeiträumen Bewegtbilder oder auch Einzelbilder in kurzen Sequenzen erfassen. Auch ist bekannt, dass Überwachungskameras mit Bewegungssensoren ausgestattet sind. In diesem Fall können die Überwachungskameras durch ihren Bewegungssensor ausgelöst werden und nehmen in der Folge für eine definierte Zeit Bildsequenzen oder Bewegtbilder auf.

Beim Einsatz von Überwachungskameras im Innenraum stellt sich jedoch bei den Heimanwendern stets das ungute Gefühl ein, dass eine Fremdüberwachung stattfinden könnte. Insbesondere sind in letzter Zeit Hackerangriffe bekannt geworden, bei denen Kameras von Computern, die eigentlich für Videotelefonie eingesetzt werden sollen, von externen Dritten über das Internet derart manipuliert wurden, dass der Nutzer ohne sein Wissen über das Internet beobachtet werden konnte.

Diese und andere Berichte haben dazu geführt, dass im Bereich der Heimanwender eine erhebliche Skepsis gegenüber einer Innenraumüberwachung mit Kameras besteht. Insbesondere bei der Einbindung der Überwachungskameras in ein Heimnetz, das beispielsweise auch an das Internet angeschlossen ist, beispielsweise via W-LAN oder LAN, ist die latente Gefahr gegeben, dass solche Überwachungskameras von Dritten "gekappert" werden und eine Fremdüberwachung stattfinden kann, ohne dass der Nutzer dies mitbekommt.

Das Dokument US 2014/301729 A1 offenbart eine Überwachungskamera gemäß dem Oberbegriff des Anspruchs 1. Weitere Überwachungskameras sind aus den Dokumenten US 2012/013744 A1, US 2014/037283 A1 und WO 2008/064270 A2 bekannt. Ausgehend von diesen Überlegungen lag dem Gegenstand die Aufgabe zugrunde, die Möglichkeit der Innenraumüberwachung mit einer Kamera zu gewährleisten, bei der gleichzeitig eine Fremdüberwachung nahezu ausgeschlossen ist.
Diese Aufgabe wird gegenständlich durch eine Überwachungskamera nach Anspruch 1, ein System nach Anspruch 8 sowie ein Verfahren nach Anspruch 13 gelöst.
Es ist erkannt worden, dass ein softwarebasierter Schutz vor Angriffen auf Überwachungskameras nahezu immer angreifbar ist. Wenn die Kamera an ein Datennetz angeschlossen ist, besteht kein 100%iger Schutz davor, dass eine solche softwaregesteuerte Kamera von außerhalb durch Dritte manipuliert werden kann. Basierend auf dieser Erkenntnis wird gegenständlich eine hardwarebasierte Lösung vorgeschlagen, bei der die Überwachungskamera mittels eines Stellantriebs bedarfsweise zwischen einem Überwachungsbereich und einem Inaktivbereich bewegt wird.
Dabei weist die Überwachungskamera zunächst einen optischen Sensor auf. Der optische Sensor kann dabei beispielsweise ein sogenannter CCD-Sensor sein. Auch können CMOS-Sensoren eingesetzt werden. Der optische Sensor verfügt in der Regel über eine Linsenoptik, um das Sichtfeld der Überwachungskamera auf den optischen Sensor zu konzentrieren.

Darüber hinaus verfügt die gegenständliche Überwachungskamera über einen Stellantrieb, insbesondere einen motorischen Stellantrieb. Solche Stellantriebe sind beispielsweise bei sogenannten Pan, Tilt, Zoom (PTZ) Kameras bekannt. Mittels der Stellantriebe lässt sich sowohl die horizontale als auch die vertikale Achse der Kamera verändern. Somit ermöglicht der Stellantrieb ein Verstellen der Kamera derart, dass sich das Sichtfeld des optischen Sensors verändert. Bei der gegenständlichen Überwachungskamera sind zwei Bereiche des Sichtfeldes definiert. Zum einen ist ein Überwachungsbereich definiert. Das Sichtfeld des optischen Sensors kann so eingestellt werden, dass es einen gesamten Überwachungsbereich abdeckt. Der Überwachungsbereich ist in der Regel der Bereich, der mit Hilfe der Überwachungskamera überwacht werden soll. Insbesondere soll ein Zugriff auf das im Überwachungsbereich erfasste Bild von einer entfernten Position aus, beispielsweise über ein Datennetz ermöglicht sein. Hierdurch soll eine Fernüberwachung eines Objektes, eines Raumes oder dergleichen ermöglicht sein.

Auf der anderen Seite schlägt die Erfindung nun ein Inaktivbereich vor, der räumlich zumindest in Teilen disjunkt zum Überwachungsbereich ist. Das optische Sichtfeld des Sensors im Überwachungsbereich schneidet sich vorzugsweise nicht räumlich mit dem optischen Sichtfeld des Sensors im Inaktivbereich. Insbesondere ist der Inaktivbereich räumlich gänzlich von dem Überwachungsbereich verschieden. Es ist jedoch auch möglich, dass sich eine Schnittmenge zwischen Überwachungsbereich und Inaktivbereich bildet.

Der Überwachungsbereich als auch der Inaktivbereich kann durch den Nutzer festgelegt werden. Der Inaktivbereich ist vorzugsweise um zumindest 90°, insbesondere zwischen 90° und 180° um vorzugsweise die Vertikalachse und/oder die Horizontalachse gegenüber dem Überwachungsbereich verschwenkt. Das heißt, dass die optische Achse des Sensors bei einer Verstellung vom Überwachungsbereich in den Inaktivbereich um zumindest 90°, vorzugsweise jedoch um bis zu 180° verschwenkt wird. Der Inaktivbereich zeigt vorzugsweise von dem Überwachungsbereich fort. Insbesondere bei Überwachungskameras, die in Ecken von Räumen oder an Wänden angeordnet sind, ist der Inaktivbereich derart, dass das Sichtfeld in Richtung der Wand zeigt und der Überwachungsbereich derart, dass das Sichtfeld in Richtung des Raumes zeigt. Insbesondere ist der Inaktivbereich auf diejenige Wand beschränkt, die der Überwachungskamera am Aufstellungsort am nächsten ist.

Um sowohl eine Überwachung zu bestimmten Bedingungen zu ermöglichen, als auch dem Nutzer die Sicherheit zu geben, dass er in bestimmten Situationen nicht überwacht werden kann, wird vorgeschlagen, dass der Stellantrieb abhängig von einem externen Stellsignal das Sichtfeld zwischen dem Überwachungsbereich und dem Inaktivbereich verstellt. Das heißt, dass ein Stellsignal vorgesehen sein kann, von dem abhängig der Stellantrieb den optischen Sensor so verstellt, dass dessen Sichtfeld den Überwachungsbereich abdeckt. Dieses Stellsignal kann dazu genutzt werden, die Überwachungskamera für eine Überwachungssituation einzurichten. In den Zeiten, in denen der Nutzer beispielsweise zu Hause ist, ist eine solche Überwachung mittels der Überwachungskamera nicht notwendig bzw. nicht gewünscht und in diesem Fall kann der Stellantrieb durch ein Stellsignal so beeinflusst werden, dass das Sichtfeld der Kamera den Inaktivbereich umfasst. Somit wird lediglich der Inaktivbereich von dem optischen Sensor aufgenommen und Aufnahmen von dem Nutzer, der sich im Überwachungsbereich bewegt, sind somit unmöglich.

Gemäß einem Ausführungsbeispiel ist es möglich, dass die Überwachungskamera einen das externe Stellsignal unmittelbar erfassenden Sensor aufweist. Insbesondere kann dies ein akustischer Sensor, beispielsweise in Form eines Mikrofons sein. Somit kann die Überwachungskamera selbsttätig das externe Stellsignal erfassen. Vorliegend kann das externe Stellsignal somit ein akustisches Signal sein, welches vom Nutzer selbst gegeben wird. Abhängig von diesem Stellsignal kann dann der Stellantrieb aktiviert werden, um das Sichtfeld zwischen dem Überwachungsbereich und dem Inaktivbereich zu verstellen. Für den Fall, dass die Überwachungskamera dieses akustische externe Stellsignal selbst erfasst, ist es jedoch notwendig, dass die Überwachungskamera stets das Eintreffen des akustischen Stellsignals überwachen muss, beispielsweise durch einen akustischen Sensor, wie z.B. ein aktives Mikrofon. Dann bleibt es bei der Problematik, dass eine Dauerüberwachung stattfindet, nur nicht mehr mittels des optischen Sensors, sondern mittels eines akustischen Sensors.

Auf der anderen Seite ist es gemäß einem Ausführungsbeispiel auch möglich, dass die Überwachungskamera das externe Stellsignal von einem räumlich von der Überwachungskamera entfernten Rechner empfangende Empfangsmittel aufweist. Mit Hilfe der Empfangsmittel ist es möglich, dass die Überwachungskamera mit einem Datennetz, beispielsweise einem W-LAN, einem LAN oder einem anderen Datennetz verbunden ist und hierüber das externe Stellsignal empfangen kann. Die entsprechenden Empfangsmittel sind in der Überwachungskamera darauf eingerichtet, Signale von dem Datennetz zu empfangen.

Gemäß einem Ausführungsbeispiel wird vorgeschlagen, dass die Empfangsmittel zum Empfangen von Signalen eines Heimautomatisierungssystems eingerichtet sind. Insbesondere können die Empfangsmittel zum Empfangen von beispielsweise Signalen nach dem Smarthome-Protokoll der Anmelderin, nach dem ZigBee-Standard, nach einem LON-Protokoll, nach einem EIB/KNX-Protokoll oder dergleichen eingerichtet sein.

Auch ist es möglich, dass die Empfangsmittel zur Kommunikation über ein Internetprotokoll eingerichtet sind. Sogenannte IP-Kameras sind hinlänglich bekannt und verfügen über Empfangs- bzw. Kommunikationsmittel zur Kommunikation über ein IP-basiertes Netz. Vorzugsweise können die Empfangsmittel UDP-Datenpakete empfangen, in denen die Stellsignale kodiert sind.

Wie erwähnt, kann die Überwachungskamera eine sogenannte PTZ-Kamera sein. Gemäß einem vorteilhaften Ausführungsbeispiel wird vorgeschlagen, dass der Stellantrieb den optischen Sensor um zumindest eine Achse rotiert. Dies kann beispielsweise die Vertikal- und/oder die Horizontalachse sein. Durch Rotieren des optischen Sensors um eine Achse wird das Sichtfeld verändert, insbesondere von dem Überwachungsbereich in den Inaktivbereich und zurück.

Gemäß einem Ausführungsbeispiel wird vorgeschlagen, dass eine Position des Stellantriebs zur Erfassung des Überwachungsbereichs parametrierbar ist. Auch kann eine Position des Stellantriebs zur Erfassung des Inaktivbereichs parametrierbar sein. Dies bedeutet, dass die Winkelposition des Stellantriebs parametrierbar sein kann, unter welcher das Sichtfeld des optischen Sensors entweder den Überwachungsbereich oder den Inaktivbereich abdeckt. Zur Parametrierung der Position des Stellantriebs kann eine Nutzerschnittstelle genutzt werden. Insbesondere ist es möglich, alle Zuordnungen und Parameter der Überwachungskamera über eine graphische Nutzerschnittstelle zu steuern. Hierbei eignen sich insbesondere Mobilcomputer, beispielsweise mobile Kommunikationsgeräte. Über deren Nutzerschnittstelle ist es möglich, den Stellantrieb der Überwachungskamera anzusteuern und bei einer bestimmten Position diese entweder dem Überwachungsbereich oder dem Inaktivbereich zuzuordnen. Insbesondere kann eine Kopplung der Überwachungskamera mit dem Kommunikationsgerät per Nahfunk, z.B. Bluetooth erfolgen.

Gemäß einem Ausführungsbeispiel wird vorgeschlagen, dass der Stellantrieb abhängig von einem externen Stellsignal das Sichtfeld in den Überwachungsbereich verstellt und dass der Stellantrieb abhängig von einem zweiten, von dem ersten Stellsignal verschiedenen externen Stellsignal das Sichtfeld in den Inaktivbereich verstellt. Es ist erkannt worden, dass es nicht nur notwendig ist, den Inaktivbereich zu aktivieren. Dies ist immer dann notwendig, wenn der Nutzer keine Überwachung wünscht. Es ist jedoch auch notwendig, dass das Sichtfeld aus dem Inaktivbereich in den Überwachungsbereich verstellt wird, wenn bestimmte Randbedingungen erfüllt sind. Solche Randbedingungen können durch das erste externe Stellsignal signalisiert werden.

Beispielsweise kann dies die Abwesenheit des Nutzers aus dem Raum, dem Haus oder Gebäude, in dem die Überwachungskamera eingerichtet ist, sein. Auch kann die räumliche Entfernung eines Nutzers zu der Überwachungskamera genutzt werden. Hierzu kann beispielsweise das mobile Kommunikationsgerät des Nutzers genutzt werden, um dessen räumliche Entfernung zu der Überwachungskamera zu überwachen und bei einem Überschreiten eines Mindestabstands kann das externe Stellsignal generiert werden. Auch können Schalter oder Taster vorgesehen sein, mit denen das erste und/oder das zweite Stellsignal aktiviert werden kann.

Um den Nutzer die Möglichkeit zu geben, wahrzunehmen, dass sich das Sichtfeld des optischen Sensors verändert bzw. dass das Sichtfeld über den Stellantrieb verändert wird, wird gemäß einem vorteilhaften Ausführungsbeispiel vorgeschlagen, dass Signalisierungsmittel eine Aktivierung des Stellantriebs in Reaktion auf das Stellsignal optisch und/oder akustisch signalisieren. Dies kann beispielsweise durch Aktivieren eines Leuchtmittels, beispielsweise einer LED der Fall sein, die dann aufleuchtet, wenn beispielsweise der Sichtbereich von dem Inaktivbereich in den Überwachungsbereich verstellt wird. Auch kann eine Dauerbeleuchtung, z.B. eine LED in einer bestimmten Farbe, z.B. grün, signalisieren, dass der Inaktivbereich eingestellt ist. Auf der anderen Seite kann der Aktivbereich durch eine andere Farbe eines Leuchtmittels signalisiert werden.

Auch kann beispielsweise über einen Lautsprecher ein Signal ausgegeben werden, wenn der Sichtbereich von dem Inaktivbereich in den Überwachungsbereich verstellt wird. Gleiches kann natürlich auch bei einer umgekehrten Verstellung von dem Überwachungsbereich in den Inaktivbereich erfolgen.

Ein weiterer Aspekt ist ein System, insbesondere ein Heimautomatisierungssystem mit einer zuvor beschriebenen Überwachungskamera und einer Zentrale. Eine Zentrale eines Heimautomatisierungssystems kann dazu eingerichtet sein, Aktoren und Sensoren des Heimautomatisierungssystems zu steuern und deren Signale zu empfangen und Signale an diese zu übermitteln. Zu diesen Signalen können natürlich auch die externen Stellsignale gehören, die über das Heimautomatisierungssystem und gegebenenfalls über einen Gateway in ein Heimnetz an eine Überwachungskamera übertragen werden können.

Gegenständlich ist die Zentrale zum Empfangen von Sensor-Signalen von zumindest einem Sensor eingerichtet. Sensoren können verschiedenster Art sein, beispielsweise Schalter oder Taster, Bewegungsmelder, Rauchmelder, Glasbruchmelder, mobile Kommunikationsgeräte, Thermostate, Näherungssensoren, Öffnungsmelder oder dergleichen. All solche Sensoren können entweder unmittelbar in das Heimautomatisierungssystem eingebunden sein und unmittelbar mit der Zentrale kommunizieren oder mittelbar über ein entsprechendes Gateway. Mit Hilfe des Gateways lassen sich die Sensorsignale aus einem ersten Kommunikationsnetz in das Protokoll des Heimautomatisierungssystems umwandeln.

Innerhalb der Zentrale lassen sich nahezu belieb Sensorsignale zu Aktoren zuordnen. Gegenständlich wird vorgeschlagen, dass die Zentrale zum Zuordnen zumindest eines der Sensorsignale zu einem Stellsignal für die Überwachungskamera eingerichtet ist. Somit ist es möglich, innerhalb der Zentrale zu parametrieren, welches Stellsignal durch ein Sensorsignal ausgelöst werden soll. Ein solches Stellsignal kann einerseits dasjenige sein, mit dem der Stellantrieb aktiviert wird, um das Sichtfeld in den Überwachungsbereich zu verstellen oder auch das Stellsignal, mit dem der Stellantrieb derart aktiviert wird, dass das Sichtfeld in den Inaktivbereich verstellt wird. Somit können unterschiedlichste Arten von Zuordnungen von Sensorsignalen zu der Einstellung der Überwachungskamera in den Überwachungsbereich oder den Inaktivbereich parametriert werden.

Auch ist das Heimautomatisierungssystem bzw. die Zentrale so eingerichtet, dass sie abhängig von der Zuordnung beim Empfang eines Sensorsignals zumindest eines Sensors das jeweilige Stellsignal an die Überwachungskamera übermittelt. Somit wird, wenn ein Sensorsignal empfangen wird in der Zentrale überprüft, ob diesem Sensorsignal ein Stellsignal zugeordnet ist und gegebenenfalls wird dieses Stellsignal dann an die Überwachungskamera übermittelt.

Gemäß einem Ausführungsbeispiel wird vorgeschlagen, dass zumindest ein erstes Stellsignal zur Steuerung des Stellantriebs derart eingerichtet ist, dass der Stellantrieb das Sichtfeld in den Überwachungsbereich verstellt. Ein weiteres, von dem ersten Stellsignal vorzugsweise verschiedenes zweites Stellsignal kann zur Steuerung des Stellantriebs derart eingerichtet sein, dass der Stellantrieb das Sichtfeld in den Inaktivbereich verstellt. Somit ist über zwei verschiedene Stellsignale die Steuerung des Stellantriebs so möglich, dass das Sichtfeld entweder in den Inaktivbereich oder in den Überwachungsbereich verstellt wird. Das Stellsignal kann auch identisch sein und beim jeweiligen Empfang des Stellsignals wird das Sichtfelfd zwischen Inaktivbereich und Überwachungsbereich gewechselt.

Wie bereits erwähnt, können verschiedenste Sensorsignale als sogenannte Trigger für das Verstellen des Sichtfelds in den Inaktivbereich oder den Überwachungsbereich dienen. Vorteilhaft ist beispielsweise, dass ein eine Scharfschaltung einer Alarmanlage signalisierendes Sensorsignal einem Stellsignal zugeordnet ist, und das abhängig von diesem Stellsignal der Stellantrieb das Sichtfeld in den Überwachungsbereich verstellt. In diesem Fall wird, wenn die Alarmanlage scharf geschaltet wird, insbesondere wenn ein bestimmter von verschiedenen Scharfschaltbereichen der Alarmanlage scharf geschaltet wird, die Überwachung mittels der Überwachungskamera aktiviert, indem deren Sichtfeld in den Überwachungsbereich verstellt wird.

Auch ist es möglich, dass, wenn eine Alarmanlage unscharf ist, gerade keine Überwachung durchgeführt werden soll. Aus diesem Grunde wird vorgeschlagen, dass ein eine Unscharfschaltung einer Alarmanlage signalisierendes Sensorsignal einem Stellsignal zugeordnet ist und dass abhängig von diesem Stellsignal der Stellantrieb das Sichtfeld in den Inaktivbereich verstellt. Sobald die Alarmanlage unscharf geschaltet wird, wird das Sichtfeld aus dem Überwachungsbereich in den Inaktivbereich verstellt und der Nutzer muss nicht befürchten, dass er bei Anwesenheit mittels der Überwachungskamera überwacht wird.

Auch ist eine Abwesenheitserkennung als auch eine Anwesenheitserkennung möglich. Eine Abwesenheitserkennung kann beispielsweise derart sein, dass die Zentrale überwacht, welche Zeit verstrichen ist, seit ein letztes Sensorsignal eingegangen ist, welches von einem Nutzer ausgelöst wurde. Nutzer verstellen, wenn sie anwesend sind, regelmäßig Schaltpositionen von Schaltern, Aktivieren Taster, verändern Temperaturen, öffnen und schließen Türen und Fenster, lösen Bewegungsmelder aus und dergleichen. Somit kann bei einer längeren Abwesenheit eines Sensorsignals, welches von einem Nutzer getriggert werden könnte, darauf geschlossen werden, dass ein Nutzer nicht anwesend ist. Wenn eine solche Abwesenheitserkennung vorhanden ist, kann ein eine Abwesenheitserkennung signalisierendes Sensorsignal einem Stellsignal zugeordnet sein und abhängig von diesem Stellsignal kann der Stellantrieb das Sichtfeld in den Überwachungsbereich verstellen. Somit wird, wenn eine Abwesenheit erkannt wurde, entweder durch die Zentrale selbst oder durch eine eigene Abwesenheitserkennungsschaltung das Sichtfeld in den Überwachungsbereich verstellt werden.

Auch kann eine Abwesenheitserkennung darin bestehen, dass ein räumlicher Abstand eine Nutzerschnittstelle, beispielsweise eines mobilen Kommunikationsgerätes von der Zentrale erfasst wird. Dabei ist beispielsweise möglich, einen räumlichen Bereich um die Zentrale zu definieren, innerhalb dessen von einer Anwesenheit eines Nutzers ausgegangen wird und wenn sich die räumliche Entfernung des Nutzers bzw. dessen Endgeräts von der Zentrale über diesen Grenzbereich vergrößert, kann auf eine Abwesenheit geschlossen werden. Wenn eine Anwesenheit erkannt wurde, ein eine Anwesenheit signalisierendes Sensorsignal ein Stellsignal zugeordnet sein und abhängig von diesem Stellsignal der Stellantrieb das Sichtfeld in den Inaktivbereich verstellen.

Wie aufgezeigt, sind unterschiedlichste Sensorsignale möglich, mit denen Stellsignale aktiviert werden können, die entweder dem Inaktivbereich oder dem Überwachungsbereich zugeordnet sind. Die genannten Beispiele sind rein beispielhaft und sollen nicht limitierend verstanden werden.

Gemäß einem Ausführungsbeispiel wird vorgeschlagen, dass eine Positionserkennung abhängig von einer erkannten Koordinate eines mobilen Kommunikationsgerätes und einem Vergleich der erkannten Koordinate mit einem Koordinatenbereich ein Sensorsignal ausgibt und dass dieses Sensorsignal einem Stellsignal zugeordnet ist, bei dem der Stellantrieb das Sichtfeld in den Überwachungsbereich verstellt. Ein solches sogenanntes "Geofencing" ermöglicht es, automatisch die Überwachung zu aktivieren, wenn sich der Nutzer räumlich von dem Heimautomatisierungssystem bzw. der Zentrale entfernt.

Gemäß einem Ausführungsbeispiel wird vorgeschlagen, dass ein mobiles Endnutzergerät eine Zuordnung eines Sensorsignals zu einem Stellsignal ermöglichend eingerichtet ist. Über eine hierzu vorgesehene Applikation kann das Endnutzergerät die Zuordnung der Sensorsignale zu den Stellsignalen ermöglichen, beispielsweise über eine graphische Nutzerschnittstelle.

Zuvor wurde bereits erwähnt, dass eine Position des Stellantriebs zur Erfassung des Überwachungsbereichs und eine Position des Stellantriebs zur Erfassung des Inaktivbereichs parametrierbar sind. Eine solche Parametrierung kann beispielsweise über ein mobiles Kommunikationsgerät erfolgen, mit Hilfe dessen eine Definition des Überwachungsbereichs und des Inaktivbereichs möglich ist. Über eine graphische Nutzersteuerung kann beispielsweise der Stellantrieb aktiviert werden und das Sichtfeld der Überwachungskamera verändert werden. An dem Endnutzergerät kann das Bild der Überwachungskamera angezeigt werden und anschließend definiert werden, dass dieses Bild entweder dem Überwachungsbereich oder dem Inaktivbereich zugeordnet sein soll. Die entsprechende Stellung des Stellantriebs wird in diesem Moment gespeichert und dem jeweiligen Bereich zugeordnet, so dass im Anschluss daran ein Verstellen der Überwachungskamera bzw. dessen Sichtfeld in dem Überwachungsbereich und dem Inaktivbereich durch Einstellen des Stellantriebs auf die gewünschte Position möglich ist.

Ein weiterer Aspekt ist ein Verfahren zum Betreiben einer Überwachungskamera mit den Schritten Verstellen eines Sichtfeldes eines optischen Sensors der Überwachungskamera, derart, dass das Sichtfeld jeweils zumindest in einem Überwachungsbereich und einen zumindest in Teilen zu dem Überwachungsbereich räumlich disjunkten Inaktivbereich verstellt wird. Es wird vorgeschlagen, dass abhängig von einem externen Stellsignal das Sichtfeld zwischen dem Überwachungsbereich und dem Inaktivbereich verstellt wird.

Nachfolgend wird der Gegenstand anhand einer Ausführungsbeispiele zeigenden Zeichnung näher erläutert. In der Zeichnung zeigen:
- Fig. 1: ein Ausführungsbeispiel einer gegenständlichen Überwachungskamera;
- Fig. 2: eine Ansicht einer Überwachungskamera;
- Fig. 3: eine Ansicht eines Raumes samt Überwachungsbereich und Inaktivbereich;
- Fig. 4: eine schematische Darstellung eines gegenständlichen Systems.

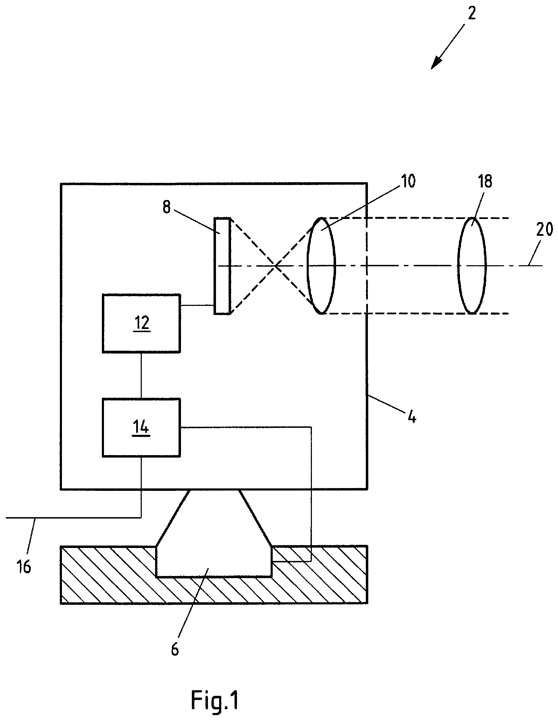

Fig. 1 zeigt eine Überwachungskamera 2. Die Überwachungskamera 2 weist ein Gehäuse 4 auf. Das Gehäuse 4 kann auch zweiteilig sein.

In dem Gehäuse 4 kann ein Stellantrieb 6 vorgesehen sein. Der Stellantrieb 6 kann ein motorischer Stellantrieb sein. Insbesondere kann der Stellantrieb 6 eine Rotation zumindest Teil des Gehäuses 4 in zumindest einer, vorzugsweise zwei Raumrichtungen ermöglichen. Insbesondere kann eine Rotation um eine Vertikalachse und/oder eine horizontale Achse ermöglicht sein.

In dem Gehäuse 4 ist ein optischer Sensor 8 vorgesehen, der über eine Linse 10 Bilder von der Umgebung der Überwachungskamera 2 erfassen kann.

Der optische Sensor 8 ist mit einem Bildverarbeitungsprozessor 12 verbunden, der die Signale des optischen Sensors 8 in Bildsignale umwandelt.

Die Bildsignale des Bildverarbeitungsprozessors 10 werden an einen zentralen Prozessor 14 in dem Gehäuse 4 übergeben.

Der Zentralprozessor 14 ist über eine Schnittstelle mit eine externen Netz 16, beispielsweise einem IP basierten Netz verbunden. Der Zentralprozessor 14 steuert darüber hinaus den Stellantrieb 6 über einen internen Steuerbus.

In der Überwachungskamera 2 können weitere Komponente verbaut sein, welche hier der Einfachheit halber nicht dargestellt sind.

Über die Linse 10 und das damit verbundene optische System aus optischem Sensor 8 und Linse 10 ergibt sich ein Sichtfeld 18 entlang einer optischen Achse 20 des optischen Sensors 8. Das Sichtfeld 18 ist in Richtung der optischen Achse 20 ausgerichtet und gestaltet sich entsprechend der Ausgestaltungen der Linse 10 und des Abstandes des optischen Sensors 8 von der Linse 10 unterschiedlich. Wesentlich ist, dass das Sichtfeld 18 einen begrenzten Raumwinkel einschließt und in diesen Sichtfeld 18 der optische Sensor 8 Bilder des Raumes erfassen kann. Außerhalb des Sichtfeldes 18 kann die Überwachungskamera 2 mit ihren optischen Sensor 8 keine Bilder erfassen.

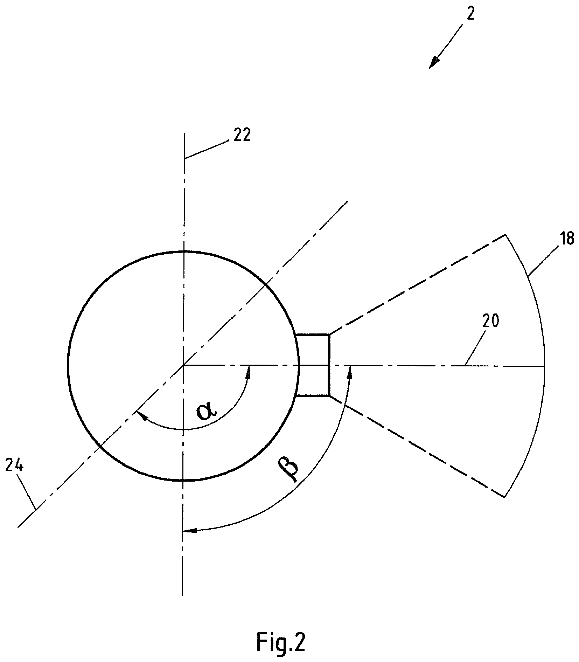

Wie in der Fig. 1 bereits erwähnt, kann die Überwachungskamera 2 mittels des Stellantriebs 6 um zumindest zwei Achsen rotiert werden. Dargestellt ist dies in Fig. 2.

Zu erkennen ist, dass die optische Achse 20 sowohl um die Vertikalachse 22 als auch um die Horizontalachse 24 verschwenkt werden kann. Die Verschwenkung der optischen Achse 20 um die Horizontalachse 24 wird durch den Winkel α ausgedrückt. Die Verschwenkung der optischen Achse 20 um die Vertikalachse 22 wird durch den Winkel β ausgelöst. Üblicherweise können Überwachungskameras 2 mit geeigneten Stellantrieben 6 zumindest um a, β =180° verschwenkt werden. Durch Verschwenken der optischen Achse 20 um einen Winkel von zumindest 90°, vorzugsweise von um einen Winkel von ungefähr 180° wird die optische Achse 20 derart verändert, dass sich das Sichtfeld 18 maßgeblich verändert. Bei einem geeignet großen Winkel α, β können Sichtfelder 18 eingestellt werden, welche sich nicht mehr überschneiden und somit vollständig disjunkt sind. Je nachdem wie groß der Öffnungswinkel des optischen Systems der Überwachungskamera 2 ist, ergibt sich ein Verstellwinkel, bei dem die sich ergebenden Sichtfelder 18 disjunkt sind. Insbesondere ist ein Verstellen um zumindest den Öffnungswinkel des optischen Systems ausreichend, um zwei disjunkte Sichtfelder 18 zu erzielen.

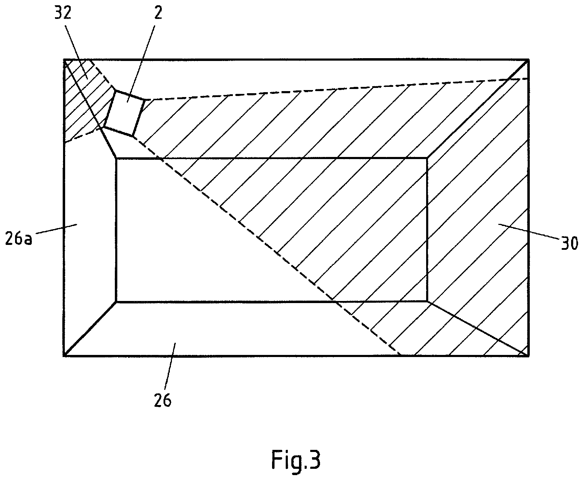

Die Einstellung der Überwachungskamera 2 mit einem Überwachungsbereich und einem Inaktivbereich ist in der Fig. 3 dargestellt. Fig. 3 zeigt einen zu überwachenden Raum 26. In dem Raum 26 ist im Bereich eines Wand 26a die Überwachungskamera 2 vorzugsweise in einer Raumecke angeordnet. Fig. 3 zeigt, dass die Überwachungskamera 2 einerseits so eingestellt werden kann, dass das Sichtfeld 18 einen Überwachungsbereich 30 einschließt. Vorzugsweise ist der Überwachungsbereich 30 in Richtung des Rauminneren gerichtet. Ferner kann der Stellantrieb 6 der Überwachungskamera 2 die optische Achse 20 derart verändern, dass das Sichtfeld 18 einen Inaktivbereich 32 abdeckt. Vorzugsweise sind Überwachungsbereiche 30 und Inaktivbereiche 32 einander abgewandte Sichtfelder 18.

Um nun dem Nutzer die Möglichkeit zu geben, zu bestimmten Konditionen und Bedingungen die Überwachungskamera 2 in den Inaktivbereich 32 zu verschwenken und andererseits bei anderen Bedingungen in den Überwachungsbereich 30, wird nun vorgeschlagen, dass die Überwachungskamera 2 abhängig von einem externen Stellsignal verstellt werden kann. Dieses externe Stellsignal kann von der Überwachungskamera 2 unmittelbar erfasst werden, in dem beispielsweise an der Überwachungskamera 2 ein Mikrofon angeordnet ist, welches ein Steuerbefehl erfasst und dieser von dem zentralen Prozessor 14 ausgewertet wird. Abhängig von der Auswertung wird der Stellantrieb 6 dann autark aktiviert und das Sichtfeld 18 der Überwachungskamera 2 wird von einem Überwachungsbereich 30 in einen Inaktivbereich 32 verschwenkt oder umgekehrt.

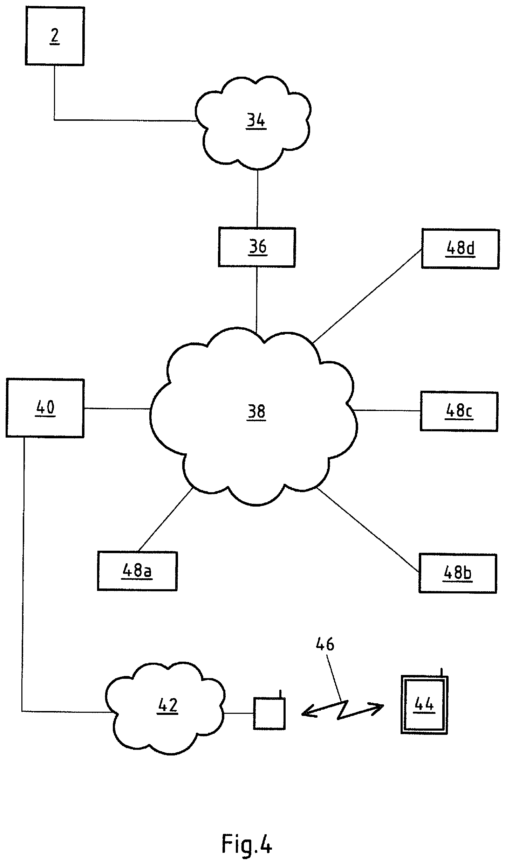

Auch ist es möglich, dass die Überwachungskamera 2 in einem Heimautomatisierungssystem eingebunden ist, wie dies in Fig. 4 dargestellt ist.

Fig. 4 zeigt die Überwachungskamera 2, die beispielsweise eine PTZ-Kamera ist, welche in einem IP-basierten Heimnetz, beispielweise einem LAN 34 eingebunden ist.

Das Heimnetz 34 ist über ein Gateway 36 mit einem Heimautomatisierungsnetz 38 verbunden. Das Heimautomatisierungsnetz 38 kann nach dem Smarthome-Protokoll der Anmelderin, dem ZigBee-Protokoll, dem EIB-Protokoll, dem LON-Protokoll oder einem sonstigen Heimautomatisierungsprotokoll betrieben werden. Das Gateway 36 setzt Befehle aus dem Heimautomatisierungsnetz 38 in Befehle für das Heimnetz 34 und umgekehrt um. Auch ist es möglich, dass die Überwachungskamera 2 unmittelbar in das Heimautomatisierungsnetz 38 eingebunden ist.

An dem Heimautomatisierungsnetz 38 ist eine Zentrale 40 angeschlossen. Die Heimautomatisierungszentrale 40 steuert das Heimautomatisierungsnetz 38 in dem Signale von Sensoren erfasst und Signale für Aktoren ausgegeben werden und über das Heimautomatisierungsnetz 38 transportiert werden.

Die Heimautomatisierungszentrale 40 kann beispielsweise auch eine Alarmzentrale sein. Die Heimautomatisierungszentrale 40 ist ihrerseits vorzugsweise über ein Weitverkehrsnetz 42 mit einem mobilen Kommunikationsgerät 44 verbunden. Das Kommunikationsgerät 44 kann beispielsweise ein Mobiltelefon sein, welches über ein Mobilfunknetz 46 an das Weitverkehrsnetz 42 angebunden ist.

In dem Heimautomatisierungsnetz 38 sind verschiedenste Sensoren 48a-d vorgesehen. Ein erster Sensor 48a kann beispielsweise ein Schalter oder Taster sein. Ein zweiter Sensor 48b kann beispielsweise ein Bewegungsmelder sein. Ein dritter Sensor 48c kann beispielsweise eine Alarmzentrale sein. Ein weiterer Sensor 48d kann beispielsweise ein Näherungsensor, beispielsweise ein Türkontaktsensor oder ein Fensterkontaktsensor sein. Weitere Sensoren sind ebenfalls möglich.

Als weiterer Sensor des Heimautomatisierungsnetzes 38 kann auch das Kommunikationsgerät 44 dienen. Auch über das Kommunikationsgerät 44 kann der Nutzer Steuerbefehle in das Heimautomatisierungsnetz 38 einfließen lassen.

Die Sensorsignale werden allesamt von der Heimautomatisierungszentrale 40 erfasst und abhängig von jeweiligen Zuordnungen in Stellsignale umgewandelt, die über das Heimautomatisierungsnetz an Aktoren versendet werden.

Bei dem gegenständlichen Verfahren erfolgt zunächst eine Definition des Überwachungsbereichs 30 als auch des Inaktivbereichs 32. Hierzu kann der Nutzer beispielsweise über sein Kommunikationsgerät 44 das von der Überwachungskamera 2 erfasste Bild betrachten. Über das Kommunikationsgerät 44 kann der Nutzer den Stellantrieb 6 der Überwachungskamera 2 ansteuern und somit die optische Achse 20 als auch das Sichtfeld 18 verändern. Somit kann der Nutzer über das Kommunikationsgerät 44 die Überwachungskamera 2 zum Beispiel so einstellen, dass dessen Sichtfeld 18 den gewünschten Überwachungsbereich 30 abdeckt. Dann kann der Nutzer über das Kommunikationsgerät 44 die Position des Stellantriebs 6 zu diesem Moment als die Position definieren, die den Überwachungsbereich 30 betrifft. Außerdem kann der Nutzer entsprechend der Einstellung der Überwachungsbereichs 30 einen Inaktivbereich 32 einstellen und die Position des Stellantriebs 6 entsprechend dem Inaktivbereich 32 zuordnen. Dann sind Überwachungsbereich 30 und Inaktivbereich 32 definiert und die jeweilige Position des Stellantriebs 6 kann abgespeichert werden. Dies kann entweder in der Überwachungskamera 2 oder der Heimautomatisierungszentrale 40 erfolgen.

Die Einstellung über das Kommunikationsgerät 44 ist nur beispielhaft. Sie kann auch durch einen stationären Computer im Heimnetz 34 oder unmittelbar an der Zentrale 40 vorgenommen werden.

Nachdem Inaktivbereich 32 und Überwachungsbereich 30 definiert wurden, können Sensorsignale diesen Bereichen zugeordnet werden, so dass wenn die entsprechenden Sensorsignale in der Zentrale 40 empfangen werden, die Zentrale Stellsignale ausgibt, um die Überwachungskamera 2 entsprechend in den Überwachungsbereich 30 oder in den Inaktivbereich 32 zu verschwenken.

Beispielsweise kann ein Sensorsignal des Sensors 48b einem Stellsignal für ein Inaktivbereich zugeordnet werden. Ein Nutzer kann beispielsweise den Raum betreten und den Sensor 48a betätigen, in dem er beispielsweise Licht anschaltet. In diesem Moment kann die Überwachung des Raumes inaktiviert werden. Das bedeutet, dass die Zentrale 40 das Sensorsignal des Sensors 48a empfängt, und eine entsprechende Zuordnung ermittelt. Wie beschrieben ist die Zuordnung derart, dass bei diesem Sensorsignal der Inaktivbereich eingestellt werden soll. Dementsprechend wird ein hierzu vorgesehenes Stellsignal von der Zentrale 40 an die Überwachungskamera 2 übermittelt. In der Überwachungskamera 2 wird dieses Stellsignal durch den Prozessor 14 ausgewertet und der Stellantrieb 6 wird angewiesen, die Position anzunehmen, die dem Inaktivbereich 32 zugewiesen ist.

Eine entsprechende Zuordnung eines Sensorsignals zu dem Inaktivbereich kann auch bei einem Sensorsignal des Bewegungsmelders 48b erfolgen. Auch wenn der Bewegungssensor 48b eine Bewegung signalisiert, mit Hilfe eines entsprechenden Sensorsignals, kann das entsprechende Stellsignal von der Zentrale 40 ausgegeben werden, um die Überwachungskamera 2 in den Inaktivbereich 32 zu verschwenken.

Die Alarmzentrale 48c kann beispielsweise überwachen, ob ein Scharfschaltsignal oder ein Unscharfschaltsignal vorliegt. Wird die Alarmzentrale 48c scharf geschaltet, ist davon auszugehen, dass der Nutzer eine Überwachung des Raumes 26 wünscht. Dem Sensorsignal "Scharfschaltung" des Sensors 48c kann dann das Stellsignal zugeordnet werden, mit Hilfe dessen die Überwachungskamera in den Überwachungsbereich 30 verschwenkt wird. Empfängt die Zentrale 40 ein entsprechendes Sensorsignal, sendet diese ein Stellsignal an die Überwachungskamera 2 und der Stellantrieb wird über den Prozessor 14 derart angetrieben, dass die Überwachungskamera in den Überwachungsbereich 30 verschwenkt.

Auf der anderen Seite kann bei einer Unscharfschaltung der Alarmanlage 48c der Inaktivbereich 32 aktiviert werden.

Auch kann die Alarmzentrale 48c als Sensor für die sogenannte "Last Human Activity" dienen. Hierbei kann die Alarmzentrale 48c Sensorsignale in dem Heimautomatisierungsnetz auswerten und feststellen, wie lange eine letzte Aktivität eines Nutzers, die anhand eines entsprechenden Sensorsignals detektierbar ist, her ist. Ist eine gewisse Mindestzeit verstrichen, kann beispielsweise ein Sensorsignal ausgegeben werden, welches die Überwachung des Raumes 26 bedingt. Wird dieses Sensorsignal empfangen, ist eine entsprechende Zuordnung in der Zentrale 40 hinterlegt und das entsprechende Stellsignal wird an die Überwachungskamera 2 übermittelt.

Auch kann eine Anwesenheitserfassung stattfinden, wozu beispielsweise die Sensorsignale der Öffnungskontakte 48d ausgewertet werden. Sind alle Öffnungskontakte 48d geschlossen und beispielsweise keine Aktivität des Nutzers feststellbar, kann auf dessen Abwesenheit geschlossen werden und eine entsprechende Überwachung durch das entsprechende Stellsignal durch die Zentrale 40 ausgelöst werden.

Nicht dargestellt ist beispielsweise auch ein Rauchmelder, der in das Heimautomatisierungsnetz 38 eingebunden ist. Wenn der Rauchmelder 38 beispielsweise anschlägt, wird dieser ein entsprechendes Sensorsignal in das Heimautomatisierungsnetz 38 einspeisen. Dieses Sensorsignal (Feuermeldung) kann in der Zentrale 40 empfangen werden. Dort kann eine Zuordnung vorliegen, dass dieses Sensorsignal zu einer Überwachung des Raumes 26 führen soll. Entsprechend dieser Zuordnung wird das jeweilige Stellsignal über das Heimautomatisierungsnetz 38, das Gateway 36 und das Heimnetz 34 an die Überwachungskamera 2 übermittelt. Dort wird mittels des Zentralprozessors 14 das Stellsignal ausgewertet und entsprechend der Stellantrieb 6 angetrieben, um das Sichtfeld 18 der Überwachungskamera 2 in den Überwachungsbereich 30 zu verschwenken.

Mit Hilfe des gezeigten Systems ist es möglich, unterschiedlichste Konfigurationen vorzunehmen, mit deren Hilfe das Sichtfeld einer Überwachungskamera 2 in einen Überwachungsbereich 30 bzw. ein Inaktivbereich 32 verschwenkt werden kann. Hierdurch kann einer Sorge vor einer Dauerüberwachung mit einer Überwachungskamera 2 begegnet werden. Nutzer können sich sicher sein, dass sie nicht ständig durch die Überwachungskamera 2 überwacht werden, da diese zu gewünschten Bedingungen nur einen Inaktivbereich 32 überwacht.

Es sei darauf hingewiesen, dass die Überwachungskamera 2 nicht stets eingeschaltet sein muss. Es reicht aus, wenn die Überwachungskamera 2 mit ihrem Sichtfeld 18 in den Inaktivbereich 32 verschwenkt ist, ohne dass diese aktiv ist. Der Nutzer weiß dann dennoch, dass eine Überwachung nicht möglich ist, da das Sichtfeld 18 von ihm angewandt ist und auch bei einem Angriff durch Dritte auf die Überwachungskamera 2 er nicht überwacht werden kann.

### Bezugszeichenliste

- 2: Überwachungskamera
- 4: Gehäuse
- 6: Stellantrieb
- 8: Optischer Sensor
- 10: Linse
- 12: Bildverarbeitungsprozessor
- 14: Zentraler Prozessor
- 18: Sichtfeld
- 20: Optische Achse
- 22: Vertikalachse
- 24: Horizontalachse
- 26: Raum
- 26a: Wand
- 30: Überwachungsbereich
- 32: Inaktivbereich
- 34: Heimnetz
- 36: Gateway
- 38: Heimautomatisierungsnetz
- 40: Heimautomatisierungszentrale
- 42: Weitverkehrsnetz
- 44: Endgerät
- 46: Mobilfunknetz
- 48a: Schalter
- 48b: Bewegungsmelder
- 48c: Alarmzentrale
- 48d: Öffnungskontakt

## Patentansprüche

1. Überwachungskamera (2) umfassend,
- einen optischen Sensor (8),
- einen Stellantrieb (6) eingerichtet zum Verstellen eines Sichtfeldes des optischen Sensors, derart, dass das Sichtfeld jeweils zumindest in einen Überwachungsbereich und einen zumindest in Teilen zu dem Überwachungsbereich räumlich disjunkten Inaktivbereich (32) verstellbar ist, wobei
- der Stellantrieb abhängig von einem externen Stellsignal das Sichtfeld zwischen dem Überwachungsbereich und dem Inaktivbereich verstellt,
**dadurch gekennzeichnet,**
- **dass** eine Position des Stellantriebs (6) zur Erfassung des Überwachungsbereichs und eine Position des Stellantriebs (6) zur Erfassung des Inaktivbereichs durch einen Nutzer parametrierbar ist.

2. Überwachungskamera nach Anspruch 1,
**dadurch gekennzeichnet,**
- **dass** die Überwachungskamera einen das externe Stellsignal unmittelbar erfassenden Sensor aufweist.

3. Überwachungskamera nach Anspruch 1 oder 2, **dadurch gekennzeichnet,**
- **dass** die Überwachungskamera das externe Stellsignal von einem räumlich von der Überwachungskamera entfernten Rechner empfangende Empfangsmittel aufweist.

4. Überwachungskamera nach Anspruch 3,
**dadurch gekennzeichnet,**
**dass** die Empfangsmittel zum Empfangen von Signalen eines Heimautomatisierungssystems eingerichtet sind.

5. Überwachungskamera nach einem der vorangehenden Ansprüche 3 oder 4 **dadurch gekennzeichnet,**
- **dass** die Empfangsmittel zur Kommunikation über ein IP Protokoll eingerichtet sind.

6. Überwachungskamera nach einem der vorangehenden Ansprüche,
**dadurch gekennzeichnet,**
- **dass** der Stellantrieb abhängig von einem ersten externen Stellsignal das Sichtfeld in den Überwachungsbereich verstellt und dass der Stellantrieb abhängig von einem zweiten, von dem ersten Stellsignal verschiedenen externen Stellsignal das Sichtfeld in den Inaktivbereich verstellt.

7. Überwachungskamera nach einem der vorangehenden Ansprüche,
**dadurch gekennzeichnet,**
- **dass** Signalisierungsmittel eine Aktivierung des Stellantriebs in Reaktion auf das Stellsignal optisch und/oder akustisch signalisieren.

8. System mit
- einer Überwachungskamera nach einem der vorangehenden Ansprüche, und
- einer Zentrale, wobei
- die Zentrale zum Empfangen von Sensor-Signalen von zumindest einem Sensor eingerichtet ist,
- die Zentrale zum Zuordnen zumindest eines der Sensor Signale zu einem Stellsignal für die Überwachungskamera eingerichtet ist und
- die Zentrale abhängig von der Zuordnung beim Empfang eines Sensor-Signals zumindest eines Sensors das jeweilige Stellsignal an die Überwachungskamera übermittelt,
**dadurch gekennzeichnet, dass**
- eine Position des Stellantriebs zur Erfassung des Überwachungsbereichs und eine Position des Stellantriebs zur Erfassung des Inaktivbereichs durch einen Nutzer parametrierbar ist.

9. System nach einem der vorangehenden Ansprüche,
**dadurch gekennzeichnet,**
- **dass** zumindest ein erstes Stellsignal zur Steuerung des Stellantriebs derart eingerichtet ist, dass der Stellantrieb das Sichtfeld in den Überwachungsbereich verstellt und/oder dass zumindest ein zweites Stellsignal zur Steuerung des Stellantriebs derart eingerichtet ist, dass der Stellantrieb das Sichtfeld in den Inaktivbereich verstellt.

10. System nach einem der vorangehenden Ansprüche,
**dadurch gekennzeichnet,**
- **dass** ein eine Scharfschaltung einer Alarmanlage signalisierendes Sensor Signal einem Stellsignal zugeordnet ist, und das abhängig von diesem Stellsignal der Stellantrieb das Sichtfeld in den Überwachungsbereich verstellt und/oder dass ein eine Unscharfschaltung einer Alarmanlage signalisierendes Sensor Signal einem Stellsignal zugeordnet ist, und das abhängig von diesem Stellsignal der Stellantrieb das Sichtfeld in den Inaktivbereich verstellt und/oder dass ein eine Abwesenheitserkennung signalisierendes Sensor Signal einem Stellsignal zugeordnet ist, und das abhängig von diesem Stellsignal der Stellantrieb das Sichtfeld in den Überwachungsbereich verstellt und/oder dass ein eine Anwesenheitserkennung signalisierendes Sensor Signal einem Stellsignal zugeordnet ist, und das abhängig von diesem Stellsignal der Stellantrieb das Sichtfeld in den Inaktivbereich verstellt.

11. System nach einem der vorangehenden Ansprüche,
**dadurch gekennzeichnet,**
- **dass** eine Positionserkennung abhängig von einer erkannten Koordinate eines Endnutzergerätes und einem Vergleich der erkannten Koordinate mit einem Koordinatenbereich ein Sensor Signal ausgibt und das dieses Sensor Signal einem Stellsignal zugeordnet ist, bei dem der Stellantrieb das Sichtfeld in den Überwachungsbereich verstellt.

12. System nach einem der vorangehenden Ansprüche,
**dadurch gekennzeichnet,**
- **dass** ein mobiles Endnutzergerät eine Zuordnung eines Sensor Signals zu einem Stellsignal ermöglichend eingerichtet ist und/der ein mobiles Endnutzergerät eine Definition des Überwachungsbereichs und des Inaktivbereichs ermöglichend eingerichtet ist

13. Verfahren zum Betreiben einer Überwachungskamera (2) umfassend,
- Verstellen eines Sichtfeldes eines optischen Sensors (8) der Überwachungskamera, derart, dass das Sichtfeld jeweils zumindest in einen Überwachungsbereich und einen zumindest in Teilen zu dem Überwachungsbereich räumlich disjunkten Inaktivbereich (32) verstellt wird, wobei
- abhängig von einem externen Stellsignal das Sichtfeld zwischen dem Überwachungsbereich und dem Inaktivbereich (32) verstellt wird,
**dadurch gekennzeichnet,**
- **dass** eine Position eines Stellantriebs (6) zur Erfassung des Überwachungsbereichs und eine Position des Stellantriebs (6) zur Erfassung des Inaktivbereichs durch einen Nutzer parametriert wird.

## Claims

1. Surveillance camera (2) comprising
- an optical sensor (8),
- an actuator (6) arranged to adjust a field of view of the optical sensor in such a way that the field of view can be adjusted respectively at least into one surveillance region and at least into an inactive region (32) which is spatially disjunctive at least in parts with respect to the surveillance region, wherein
- the actuator adjusts the field of view between the surveillance region and the inactive region depending on an external control signal,
**characterized in that**
- a position of the actuator (6) for capturing the surveillance region and a position of the actuator (6) for capturing the inactive region can be parameterized by a user.

2. Surveillance camera according to claim 1,
**characterized in that**
- the surveillance camera comprises a sensor which directly obtains the external control signal.

3. Surveillance camera according to claim 1 or 2,
**characterized in that**
- the surveillance camera comprises receiving means which receive the external control signal from a computer which is spatially remote from the surveillance camera.

4. Surveillance camera according to claim 3,
**characterized in that**
- the receiving means are arranged to receive signals from a home automation system.

5. Surveillance camera according to one of the preceding claims 3 or 4,
**characterized in that**
- the receiving means are arranged for communication via an IP protocol.

6. Surveillance camera accoriding to one of the preceding claims,
**characterized in that**
- the actuator adjusts the field of view into the surveillance region as a function of a first external control signal, and **in that** the actuator adjusts the field of view into the inactive region as a function of a second external control signal which is different from the first control signal.

7. Surveillance camera according to one of the preceding claims,
**characterized in that**
- signalling means optically and/or acoustically signal an activation of the actuator in response to the control signal.

8. System with
- a surveillance camera according to one of the preceding claims, and
- of a center, wherein
- the center is arranged to receive sensor signals from at least one sensor,
- the center is arranged to assign at least one of the sensor signals to a control signal for the surveillance camera, and
- the center transmits, on receipt of a sensor signal from at least one sensor, the respective control signal to the surveillance camera depending on the assignment,
**characterized in that**
- a position of the actuator for capturing the surveillance region and a position of the actuator for capturing the inactive region can be parameterised by a user.

9. System according to one of the preceding claims,
**characterized in that**
- at least one first control signal for controlling the actuator is arranged in such a way that the actuator adjusts the field of view into the surveillance region and/or at least one second control signal for controlling the actuator is arranged in such a way that the actuator adjusts the field of view into the inactive region.

10. System according to one of the preceding claims,
**characterized in that**
- a sensor signal signalling an arming of an alarm system is assigned to a control signal, and the actuator adjusts the field of view into the surveillance region as a function of this control signal and/or **in that** a sensor signal signalling a disarming of an alarm system is assigned to a control signal, and the actuator adjusts the field of view into the inactive region as a function of this control signal and/or that a sensor signal signalling an absence detection is assigned to a control signal, and the actuator adjust the field of view into the surveillance region as a function of this control signal and/or that a sensor signal signalling a presence detection is assigned to a control signal, and the actuator adjusts the field of view into the inactive region as a function of this control signal.

11. System according to one of the preceding claims,
**characterized in that**
- a position detection outputs a sensor signal as a function of a detected coordinate of an end-user device and a comparison of the detected coordinate with a coordinate range, and **in that** this sensor signal is assigned to a control signal according to which the actuator adjusts the field of view into the surveillance region.

12. System based on one of the preceding claims,
**characterized in that**
- a mobile end-user device is arranged for enabling an assignment of a sensor signal to a control signal and/or a mobile end-user device is arranged for enabling a definition of the surveillance region and the inactive region.

13. Method for operating a surveillance camera (2) comprising,
- Adjusting a field of view of an optical sensor (8) of the surveillance camera in such a way that the field of view is adjusted respectively at least into a surveillance region and at least into an inactive region (32) which is spatially disjunctive at least in parts with respect to the surveillance region, wherein
- depending on an external control signal, the field of view is adjusted between the surveillance region and the inactive region (32),
**characterized in that**
- a position of an actuator (6) for capturing the surveillance region and a position of the actuator (6) for capturing the inactive region are parameterized by a user.

## Revendications

1. Caméra de surveillance (2) comprenant,
- un capteur optique (8),
- un actionneur (6) configuré pour ajuster un champ de vision du capteur optique de telle sorte que le champ de vision puisse être respectivement au moins dans une zone de surveillance et au moins dans une zone inactive (32) qui est au moins en partie spatialement disjonctive par rapport à la zone de surveillance, où
- le servomoteur règle le champ de vision entre la zone de surveillance et la zone inactive en fonction d'un signal de commande externe,
**caractérisée en ce**
- **qu'**une position de l'actionneur (6) pour détecter la zone de surveillance et une position de l'actionneur (6) pour détecter la zone inactive peuvent être paramétrées par un utilisateur.

2. Caméra de surveillance selon la revendication 1,
**caractérisée**
- **en ce que** la caméra de surveillance possède un capteur qui détecte directement le signal de commande externe.

3. Caméra de surveillance selon la revendication 1 ou 2,
**caractérisée**
- **en ce que** la caméra de surveillance comporte des moyens de réception qui reçoivent le signal de commande externe d'un ordinateur éloigné spatialement de la caméra de surveillance.

4. Caméra de surveillance selon la revendication 3,
**caractérisée**
- **en ce que** les moyens de réception sont configurés pour recevoir des signaux d'un système domotique.

5. Caméra de surveillance selon l'une des revendications précédentes 3 ou 4,
**caractérisée**
- que les moyens de réception sont prévus pour la communication via un protocole IP.

6. Caméra de surveillance selon l'une des revendications précédentes,
**caractérisée**
- **en ce que** l'actionneur déplace le champ de vision dans la zone de surveillance en fonction d'un premier signal de commande externe, et en ce que l'actionneur déplace le champ de vision dans la zone inactive en fonction d'un second signal de commande externe qui est différent du premier signal de commande.

7. Caméra de surveillance selon l'une des revendications précédentes,
**caractérisée**
- **en ce que** des moyens de signalisation signalent optiquement et/ou acoustiquement une activation de l'actionneur en réponse au signal de commande.

8. Système avec
- une caméra de surveillance selon l'une des revendications précédentes, et
- une centrale, où
- la centrale est configurée pour recevoir des signaux de capteur d'au moins un capteur,
- la centrale est configurée de manière à affecter au moins l'un des signaux de capteur à un signal de commande pour la caméra de surveillance, et
- la centrale transmet le signal de commande correspondant à la caméra de surveillance en fonction de l'affectation lors de la réception d'un signal de capteur d'au moins un capteur,
**caractérisé en ce qu'**
- une position de l'actionneur pour la détection de la zone de surveillance et une position de l'actionneur pour la détection de la zone inactive peuvent être paramétrées par un utilisateur.

9. Système selon l'une des revendications précédentes,
**caractérisée**
- **en ce qu'**au moins un premier signal de commande pour commander l'actionneur est configuré de telle sorte que l'actionneur ajuste le champ de vision dans la zone de surveillance et/ou en ce qu'au moins un second signal de commande pour commander l'actionneur est configuré de telle sorte que l'actionneur déplace le champ de vision dans la zone inactive.

10. Système selon l'une des revendications précédentes,
**caractérisé**
- **en ce qu'**un signal de capteur signalant l'armement d'un système d'alarme est affecté à un signal de commande, et en ce que l'actionneur déplace le champ de vision dans la zone de surveillance en fonction de ce signal d'actionnement et/ou en ce qu'un signal de capteur signalant le désarmement d'un système d'alarme est affecté à un signal de commande, et en ce que l'actionneur déplace le champ de vision dans la zone inactive en fonction de ce signal de commande et/ou en ce qu'un signal de capteur signalant une détection d'absence est affecté à un signal de commande, et en ce que l'actionneur déplace le champ de vision dans la zone de surveillance en fonction de ce signal de commande et/ou en ce qu'un signal de capteur signalisant une détection de présence est affecté à un signal de commande, et en ce que l'actionneur déplace le champ de vision dans la zone inactive en fonction de ce signal de commande.

11. Système selon l'une des revendications précédentes,
**caractérisé**
- **en ce qu'**une détection de position délivre un signal de capteur en fonction d'une coordonnée détectée d'un terminal d'utilisateur et d'une comparaison de la coordonnée détectée avec une plage de coordonnées, et en ce que ce signal de capteur est affecté à un signal de commande selon lequel l'actionneur déplace le champ visuel dans la plage de surveillance.

12. Système basé sur l'une des revendications précédentes,
**caractérisé**
- **en ce qu'**un terminal d'utilisateur mobile est configuré pour permettre l'affectation d'un signal de capteur à un signal de commande et/ou un terminal d'utilisateur mobile est configuré pour permettre une définition de la zone de surveillance et de la zone inactive.

13. Procédé de fonctionnement d'une caméra de surveillance (2) comprenant,
- Réglage d'un champ de vision d'un capteur optique (8) de la caméra de surveillance de telle sorte que le champ de vision soit réglé respectivement au moins dans une zone de surveillance et au moins en parties dans une zone inactive (32) qui est spatialement disjonctive par rapport à la zone de surveillance, où
- le champ de vision est réglé entre la zone de surveillance et la zone inactive (32) en fonction d'un signal de commande externe,
**caractérisé**
- **en ce qu'**une position d'un actionneur (6) pour détecter la zone de surveillance et une position de l'actionneur (6) pour détecter la zone inactive sont paramétrées par un utilisateur.
